# EUROPÄISCHE PATENTSCHRIFT

(11) **EP 2 943 910 B1**
(45) Veröffentlichungstag und Bekanntmachung des Hinweises auf die Patenterteilung: **05.10.2016**
(21) Anmeldenummer: 13798285.6
(22) Anmeldetag: 21.11.2013
(51) Int. Cl.: G06K 9/00, G08G 1/16

(54) **ERSTELLUNG EINER HINDERNISKARTE**
CREATION OF AN OBSTACLE MAP
CRÉATION D'UNE CARTE D'OBSTACLES

(30) Priorität: 14.01.2013 DE 102013200387
(43) Veröffentlichungstag der Anmeldung: 18.11.2015
(73) Patentinhaber: Robert Bosch GmbH, 70442 Stuttgart (DE)
(72) Erfinder: PINK, Oliver, 74232 Abstatt (DE); MUEHLMANN, Karsten, 70499 Stuttgart (DE); HASBERG, Carsten, 74360 Ilsfeld-Auenstein (DE)
(86) Internationale Anmeldenummer: PCT/EP2013/074331
(87) Internationale Veröffentlichungsnummer: WO 2014/108233

(56) Entgegenhaltungen:
- DE-A1-102011 078 615
- US-A- 5 343 206
- US-A1- 2011 228 980
- GINDELE T ET AL: "Bayesian Occupancy grid Filter for dynamic environments using prior map knowledge", INTELLIGENT VEHICLES SYMPOSIUM, 2009 IEEE, IEEE, PISCATAWAY, NJ, USA, 3. Juni 2009 (2009-06-03), Seiten 669-676, XP031489920, ISBN: 978-1-4244-3503-6 in der Anmeldung erwähnt

## Beschreibung

Die Erfindung betrifft ein Kraftfahrzeug mit einer Assistenzfunktion oder einer autonomen Steuerung. Insbesondere betrifft die Erfindung die Erstellung einer Hinderniskarte bezüglich einer Umgebung des Kraftfahrzeugs.

Um ein automatisiertes oder teilautomatisiertes Steuern eines Kraftfahrzeugs zu ermöglichen ist es üblich, eine Umgebung des Kraftfahrzeugs mittels Sensoren abzutasten um zu bestimmen, wo sich Hindernisse befinden, mit denen das Kraftfahrzeug nicht kollidieren soll. Dazu wird die Umgebung üblicher Weise gedanklich in ein regelmäßiges Raster unterteilt und für jede Zelle des Rasters wird bestimmt, ob sich in ihr ein Hindernis befindet. Die so gewonnenen Informationen werden auf eine Hinderniskarte übertragen, die eine Anzahl Rasterpunkte umfasst, deren Anordnung der Anordnung der Zellen der Umgebung des Kraftfahrzeugs entspricht. Ein Rasterpunkt, der zu einer Zelle korrespondiert, die zu mehr als einem vorbestimmten Grad belegt ist, wird gekennzeichnet.

Auf der Basis der Hinderniskarte kann anschließend bestimmt werden, wie das Kraftfahrzeug gesteuert werden muss, um eine Kollision mit einem der Hindernisse zu vermeiden. Dazu kann insbesondere bestimmt werden, welche Zellen zu einem zukünftigen Zeitpunkt belegt sein werden. Dadurch kann eine Kollisionsvermeidung auch mit einem beliebigen Objekt realisiert werden.

Eine derartige Technik ist beispielsweise in "Bayesian Occupancy Grid Filter for Dynamic Environments Using Prior Map Knowledge", T. Gindele, S. Brechtel, J. Schröder, R. Dillmann; IEEE Intelligent Vehicles Symposium, S. 669-676, China, 2009 gezeigt.

US 5 343 206 A1 betrifft eine Technik zur Kollisionsvermeidung zwischen einem Kraftfahrzeug und einem Hindernis.

DE 10 2011 078 615 A1 schlägt ein System und ein Verfahren zur Objekterfassung vor, um eine Umgebung eines Kraftfahrzeugs auf Objekte hin zu untersuchen.

US 2011 0228980 A1 zeigt Vorrichtungen zur Abtastung einer Umgebung eines Kraftfahrzeugs und zur Steuerung des Kraftfahrzeugs.

Klassische Hinderniskarten der genannten Art müssen fein gerastert sein, um eine genügend genaue Steuerung des Kraftfahrzeugs zu erlauben. Dadurch kann die Komplexität der Verarbeitung der Hinderniskarte schnell Größen annehmen, die in einem Echtzeitsystem nur schwer zu realisieren sind. Umfasst die Hinderniskarte beispielsweise eine Matrix von 100 x 100 Rasterpunkten, so besteht sie aus 10.000 binären Rasterpunkten, die einer Anzahl von 2^{10.000} möglichen Hinderniskarten entsprechen. Die oben angedeutete zeitliche Vorhersage einer zukünftigen Hinderniskarte auf der Basis einer bestehenden Hinderniskarte kann so zu einem praktisch unlösbaren Problem werden.

Es ist Aufgabe der Erfindung, eine Technik anzugeben, mit der eine verbesserte Hinderniskarte erstellt werden kann. Eine weitere Aufgabe besteht in der Angabe einer verbesserten Steuerung eines Kraftfahrzeugs auf der Basis einer Hinderniskarte. Die Erfindung löst diese Aufgabe mittels eines Verfahrens eines Computerprogrammprodukts und einer Vorrichtung mit den Merkmalen der unabhängigen Ansprüche. Unteransprüche geben bevorzugte Ausführungsformen wieder.

Nach einem ersten Aspekt umfasst ein Verfahren zum Erstellen einer Hinderniskarte einer Umgebung eines Kraftfahrzeugs auf einer Straße Schritte des Bereitstellens einer gerasterten Hinderniskarte, des Abtastens einer Umgebung des Kraftfahrzeugs, wobei die Umgebung in Zellen unterteilt ist, des Erfassens von Zellen, die durch ein Hindernis belegt sind, und des Kennzeichnens von Rasterpunkten der Hinderniskarte, die zu belegten Zellen in der Umgebung korrespondieren. Dabei werden Ausdehnungen der Zellen in Abhängigkeit ihrer Lage bezüglich des Verlaufs der Straße bestimmt.

Auf diese Weise ist es möglich, ein vorgegebenes Gebiet in eine verringerte Anzahl von Zellen zu unterteilen, deren Ausdehnungen so gewählt sind, das Informationen aus weniger relevanten Teilen der Umgebung zusammenfasst sind.

Der Rechenaufwand eines Bestimmungsverfahrens auf der Basis der Hinderniskarte kann so signifikant reduziert sein. Die Verwendung der Hinderniskarte kann insgesamt vereinfacht sein. Beispielsweise kann eine genauere zeitliche Vorhersage der Bewegung eines beweglichen Hindernisses ermöglicht sein. Insbesondere kann die Bewegung eines anderen Verkehrsteilnehmers entlang des Straßenverlaufs verbessert prädiziert werden.

In einer Ausführungsform werden die geometrischen Formen der Zellen in Abhängigkeit ihrer Lagen bezüglich des Verlaufs der Straße bestimmt. Durch die Verwendung von Zellen, die nicht notwendiger Weise quadratisch sind, sondern beispielsweise die Form eines Rechtecks oder eines Kreissegments aufweisen, können die relevanten Informationen aus der Umgebung des Kraftfahrzeugs verbessert auf die Hinderniskarte abgebildet werden.

In einer weiteren Ausführungsform weisen wenigstens einige Zellen eine Hauptachse auf, wobei die Hauptachsen dieser Zellen in Abhängigkeit des Verlaufs der Straße ausgerichtet sind. Ausgehend davon, dass sich das Kraftfahrzeug entlang der Straße bewegt, können sich die Zellen beispielsweise mit ihren Hauptachsen entlang der Straße erstrecken, sodass redundante Informationen nicht unnötig viel Speicherplatz für die Hinderniskarte einnehmen.

Erfindungsgemäß sind die Ausrichtungen der Zellen an ein Höhenprofil der Straße angepasst. Dadurch kann eine Entfernungsschätzung zwischen dem Kraftfahrzeug und dem Hindernis, insbesondere einem beweglichen Hindernis, verbessert durchgeführt werden, da nicht der Abstand in Längsoder Querrichtung des Kraftfahrzeugs geschätzt wird, sondern der tatsächliche Abstand entlang des Straßenverlaufs. Projektionsfehler können auf diese Weise verringert sein.

Bevorzugterweise wird der Verlauf der Straße auf der Basis einer Folge von Wegpunkten interpoliert. Die Wegpunkte können beispielsweise von einem Navigationssystem bezogen werden, in dem der Verlauf der Straße abgelegt ist.

In einer weiteren Ausführungsform steigt die Ausdehnung der Zellen in Bewegungsrichtung des Kraftfahrzeugs mit dem Abstand vom Kraftfahrzeug an. Je näher eine Zelle in Bewegungsrichtung des Kraftfahrzeugs am Kraftfahrzeug liegt, desto geringer ist folglich ihre Ausdehnung. Der für eine Kollisionsvermeidung besonders relevante Nahbereich des Kraftfahrzeugs kann so mit hoher Auflösung beschrieben sein, während ein weiter entfernt liegender Bereich mit geringerer Auflösung in der Hinderniskarte repräsentiert sein kann.

Nach einem zweiten Aspekt umfasst ein Verfahren zum Steuern eines Kraftfahrzeugs Schritte des Erstellens einer Hinderniskarte mittels des oben beschriebenen Verfahrens und des Bereitstellens von Steuersignalen für das Kraftfahrzeug auf der Basis der Hinderniskarte, um eine Kollision zwischen dem Kraftfahrzeug und einem Hindernis zu vermeiden. Eine derartige Funktionalität kann beispielsweise als Fahrerassistenzsystem implementiert sein. Dabei kann insbesondere eine Vermeidung einer Kollision mit einem Gegenstand im Bereich der Straße realisiert sein.

Ein Computerprogrammprodukt umfasst Programmcodemittel zur Durchführung eines der beschriebenen Verfahren, wenn das Computerprogrammprodukt auf einer Verarbeitungseinrichtung abläuft oder auf einem computerlesbaren Datenträger gespeichert ist.

Nach einem weiteren Aspekt umfasst eine Vorrichtung zur Erstellung einer Hinderniskarte einer Umgebung eines Kraftfahrzeugs auf einer Straße einen Speicher zur Aufnahme einer gerasterten Hinderniskarte, eine Abtasteinrichtung zur Abtastung einer Umgebung des Kraftfahrzeugs, wobei die Umgebung in Zellen unterteilt ist, eine Verarbeitungseinrichtung zur Erfassung von Zellen, die durch ein Hindernis belegt sind und zur Kennzeichnung von Rasterpunkten der Hinderniskarte, die zu belegten Zellen in der Umgebung korrespondieren, wobei die Verarbeitungseinrichtung ferner dazu eingerichtet ist, Ausdehnungen der Zellen in Abhängigkeit ihrer Lage bezüglich des Verlaufs der Straße zu bestimmen.

Die Vorrichtung kann zur effizienten Erstellung der Hinderniskarte eingerichtet sein. In einer weiteren Ausführungsform ist die Vorrichtung zusätzlich zur Auswertung der Hinderniskarte eingerichtet, wobei insbesondere eine Bereitstellung von Steuersignalen zum Beeinflussen einer Trajektorie des Kraftfahrzeugs umfasst sein kann. In einer Ausführungsform ist die Verarbeitungseinrichtung auch dazu eingerichtet, die Hinderniskarte für einen zukünftigen Zeitpunkt vorherzusagen. Die Bereitstellung der Steuersignale kann dann auf der Basis der vorhergesagten Hinderniskarte erfolgen.

### Kurze Beschreibung der Figuren

Die Erfindung wird nun mit Bezug auf die beigefügten Figuren genauer beschrieben, in denen:
- Figur 1: eine Vorrichtung an Bord eines Kraftfahrzeugs;
- Figuren 2A bis C: beispielhafte Einteilungen einer Umgebung des Kraftfahrzeugs aus Figur 1 in Zellen, und
- Figur 3: ein Ablaufdiagramm eines Verfahrens zur Steuerung des Kraftfahrzeugs aus Figur 1
darstellt.

### Genaue Beschreibung von Ausführungsbeispielen

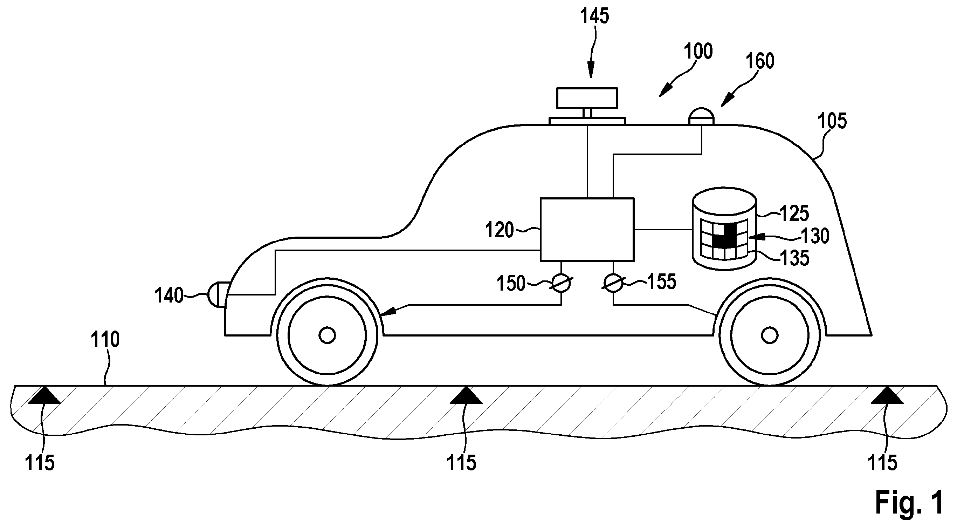

Figur 1 zeigt eine Vorrichtung 100 an Bord eines Kraftfahrzeugs 105. Das Kraftfahrzeug 105 befindet sich auf einer Straße 110, deren Verlauf durch eine Anzahl Wegpunkte 115 angegeben werden kann. Jeder Wegpunkt 115 umfasst eine Position und kann zusätzlich wenigstens eines von einer Höhe, einer Steigung und einer Orientierung besitzen. Umfassen die Wegpunkte 115 Höhenangaben, so definiert eine Vielzahl Wegpunkte 115 ein Höhenprofil, das zur genaueren Bestimmung des Straßenverlaufs verwendet werden kann.

Die Vorrichtung 100 umfasst eine Verarbeitungseinrichtung 120, die mit einem Speicher 125 und wenigstens einem Sensor verbunden ist. Der Speicher 125 ist dazu eingerichtet, eine Repräsentation einer gerasteten Hinderniskarte 130 aufzunehmen, die eine Anzahl Rasterpunkte 135 umfasst. Die Hinderniskarte 130 stellt eine Repräsentation einer Umgebung des Kraftfahrzeugs 105 dergestalt dar, dass aus ihr hervorgeht, welche Bereiche der Umgebung des Kraftfahrzeugs 105 durch ein Hindernis belegt sind und welche nicht. Üblicherweise ist die Hinderniskarte 130 in Form einer regelmäßigen Matrix organisiert und jeder Rasterpunkt 135 trägt eine binäre Information.

In der Darstellung von Figur 1 ist die Verarbeitungseinrichtung 120 mit mehreren Sensoren verbunden, nämliche einem Radarsensor 140 und einem Lasersensor 145. Zusätzlich oder alternativ können auch andere Sensoren vorgesehen sein, beispielsweise ein Kamerasensor oder ein LIDAR-Sensor. Die Sensoren 140, 145 sind dazu eingerichtet, die Umgebung des Kraftfahrzeugs 105 abzutasten.

Die Verarbeitungseinrichtung 120 bestimmt auf der Basis der Abtastung durch die Sensoren 140, 145, wo in der Umgebung des Kraftfahrzeugs 105 sich ein Hindernis befindet. Für diese Bestimmung teilt die Verarbeitungseinrichtung 120 die Umgebung des Kraftfahrzeugs 105 in Zellen ein, wobei jeder Zelle ein Rasterpunkt 135 der Hinderniskarte 130 im Speicher 125 zugeordnet ist. Ist eine Zelle in ausreichendem Maße durch ein Hindernis belegt, so kennzeichnet die Verarbeitungseinrichtung 125 den korrespondieren Rasterpunkt 135 auf der Hinderniskarte 130.

In einer Ausführungsform ist die Verarbeitungseinrichtung 120 ferner dazu eingerichtet, auf der Basis der Hinderniskarte 130 eine Steuerung des Kraftfahrzeugs 105 durchzuführen. Hierzu verfügt die Verarbeitungseinrichtung 120 über eine erste Schnittstelle 150 zur Beeinflussung einer Richtungssteuerung und/oder eine zweite Schnittstelle 155 zur Beeinflussung einer Geschwindigkeit des Kraftfahrzeugs 105. Über eine der Schnittstellen 150, 155 kann die Verarbeitungseinrichtung 120 Signale ausgeben, um eine Kollision des Kraftfahrzeugs 105 mit einem Hindernis in der Umgebung zu vermeiden. Zur Bereitstellung der Signale für die Schnittstellen 150, 155 kann die Verarbeitungseinrichtung 120 ferner dazu eingerichtet sein, die Hinderniskarte 130 für einen zukünftigen Zeitpunkt zu prädizieren, d. h., die Kennzeichnungen der Rasterpunkte 135 für einen zukünftigen Zeitpunkt vorherzusagen.

Es wird vorgeschlagen, dass die Aufteilung der Umgebung des Kraftfahrzeugs 105 in Zellen derart erfolgt, dass Ausdehnungen der Zellen in Abhängigkeit ihrer Lage bezüglich des Verlaufs der Straße 110 stehen. Die Aufteilung der Umgebung in Zellen wird vorzugsweise durch die Verarbeitungseinrichtung 120 durchgeführt. Dabei kann der Verlauf der Straße 110 durch die Verarbeitungseinrichtung 120 beispielsweise auf der Basis der Wegpunkte 115 bestimmt werden. Die Wegpunkte 115 können beispielsweise aus einem Kartenspeicher eines Navigationssystems 160 bezogen werden. Alternativ oder zusätzlich können Wegpunkte 115 auf der Basis von Signalen der Sensoren 140, 145 bestimmt werden.

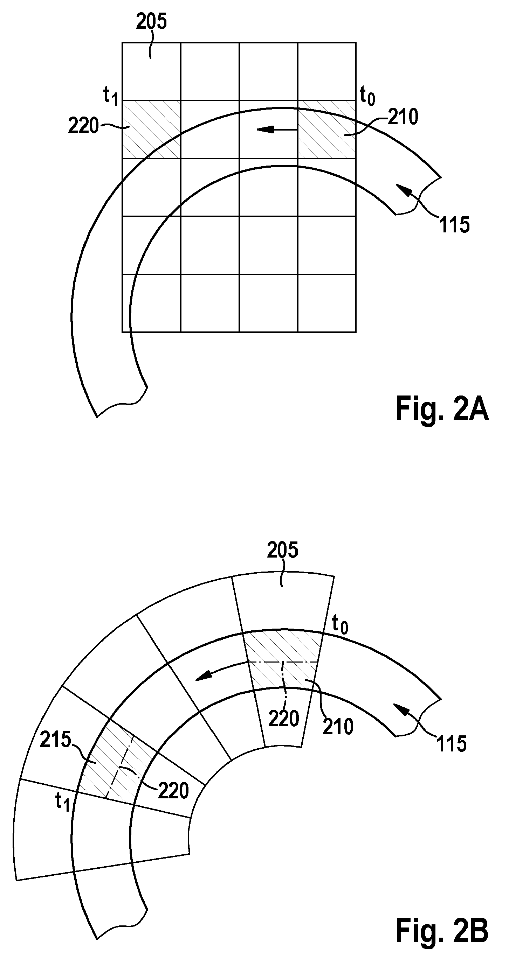

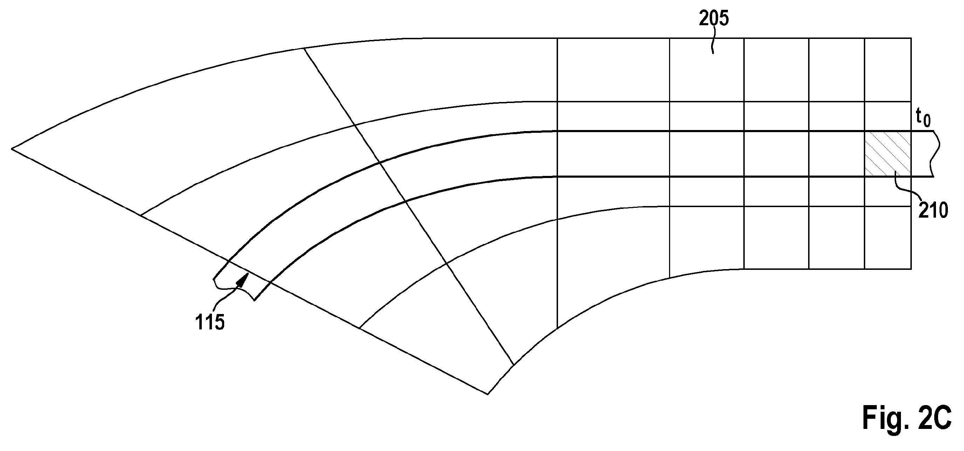

Figur 2 zeigt beispielhafte Einteilungen der Umgebung des Kraftfahrzeugs 105 aus Figur 1 in Zellen 205. Figur 2A zeigt eine klassische Einteilung der Umgebung in eine regelmäßige Anordnung quadratischer Zellen 205. Eine dazu gehörige Hinderniskarte 130 weist üblicherweise eine entsprechende Struktur auf, wobei die Zellen 205 durch Rasterpunkte 135 ersetzt sind.

Eine erste Zelle 210 befindet sich teilweise auf der Straße 110. Zu einem ersten Zeitpunkt T0 befindet sich ein Hindernis in der ersten Zelle 210, weshalb diese als belegt markiert ist. Das Hindernis kann beispielsweise das Kraftfahrzeug 105 oder einen anderen Verkehrsteilnehmer umfassen. Auf der Basis einer Bewegungsrichtung und einer Bewegungsgeschwindigkeit kann für einen späteren Zeitpunkt t1 vorhergesagt werden, dass sich das Hindernis zu einer zweiten Zelle 220 weiterbewegt hat, die in Figur 2A ebenfalls als belegt markiert ist. Die zweite Zelle 220 befindet sich nur noch zu einem kleinen Teil auf der Straße 110. Figur 2B zeigt eine andere Einteilung der Umgebung des Kraftfahrzeugs 105 aus Figur 1 in Zellen 205. In der gewählten Einteilung sind Ausdehnungen der Zellen 205 in Abhängigkeit ihrer jeweiligen Lage bezüglich des Verlaufs der Straße 110 bestimmt. Insbesondere ist der Verlauf der Straße 110 trotz der Kurve, die sie beschreibt, in eine lineare Serie aneinander angrenzender Zellen 205 unterteilt. Benachbarte Zellen 205 zu beiden Seiten der Straße 110 weisen Formen und Ausdehnungen auf, die dieser Aufteilung folgen. Die Belegung der zweiten Zelle 220 zum Zeitpunkt t1 ist wieder auf der Basis von Geschwindigkeits- und Richtungsinformationen über das Hindernis in der ersten Zelle 210 zum Zeitpunkt t0 bestimmt. Da die zweite Zelle 210 vollständig auf der Straße 110 liegt, reflektiert sie zum Zeitpunkt t1 wesentlich realistischer den Aufenthaltsort des Hindernisses, das zum Zeitpunkt t1 in der ersten Zelle 210 lag, falls es sich bei dem Hindernis um ein Fahrzeug handelt, das der Straße 110 folgt.

Durch die Bestimmung der Ausdehnungen der Zellen 205 in Abhängigkeit ihrer Lage bezüglich des Verlaufs der Straße 110 kann also eine vereinfachte Vorhersage der Hinderniskarte 130 für einen zukünftigen Zeitpunkt ermöglicht werden. Außerdem können insgesamt weniger Zellen 205 in der Umgebung des Kraftfahrzeugs 105 bestimmt sein, da irrelevante Bereiche weg gelassen und wenig relevante Bereiche in relativ großen Zellen 205 zusammengefasst sein können, so dass weniger Rasterpunkte 135 von der Hinderniskarte 130 umfasst sein müssen, um ausreichend viele relevante Informationen speichern zu können.

Für die Zellen 210 und 215 sind auch Hauptachsen 220 eingezeichnet, die sich jeweils entlang der größten Ausdehnung der Zelle 210 bzw. 215 erstrecken. Die Hauptachsen 220 sind in der dargestellten Ausführungsform in Abhängigkeit des Verlaufs der Straße 115 ausgerichtet, wobei die Hauptachsen 220 vorzugsweise parallel zu Tangenten an den Verlauf der Straße 115 im Bereich der jeweiligen Zelle 210, 215 verlaufen.

Figur 2C zeigt eine weitere beispielhafte Einteilung der Umgebung des Kraftfahrzeugs 105 aus Figur 1 in Zellen 205. Hier ist die Ausdehnung der Zellen in Abhängigkeit ihres Abstands zum Kraftfahrzeug 105 in der ersten Zelle 210 entlang des Verlaufs der Straße 110 gewählt. Je weiter eine Zelle 205 entlang der Straße 110 vom Kraftfahrzeug 105 entfernt ist, desto größer ist ihre Ausdehnung. In der dargestellten Ausführungsform steigen auch die Ausdehnungen der Rasterpunkte 205 in Abhängigkeit ihres Abstands quer zur Straße 110 an. Auf diese Weise kann weiter Platz im Speicher 125 und gegebenenfalls ein Verarbeitungsaufwand zur Vorhersage der Hinderniskarte 130 für einen zukünftigen Zeitpunkt erleichtert sein. Diese Ausführungsform ist mit anderen, insbesondere der in Figur 2B gezeigten, kombinierbar.

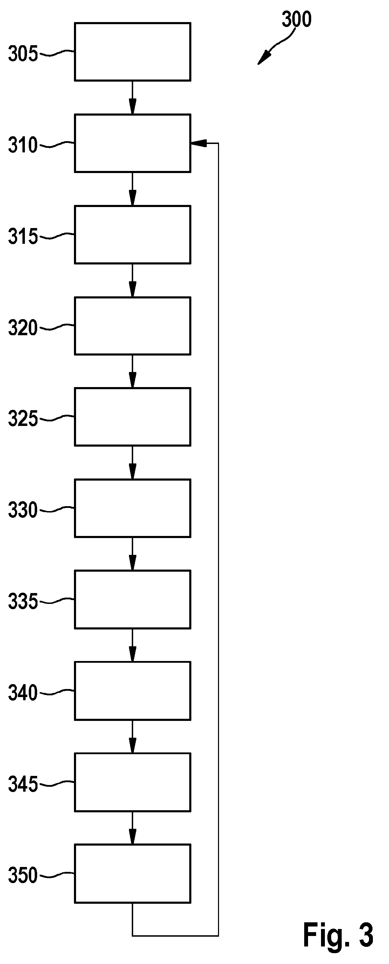

Figur 3 zeigt ein Ablaufdiagramm eines Verfahrens 300 zur Steuerung des Kraftfahrzeugs 105 aus Figur 1. Das Verfahren 300 gliedert sich in einen ersten Abschnitt mit Schritten 305 bis 340, in denen die Hinderniskarte 130 der Umgebung des Kraftfahrzeugs 105 bestimmt wird, und einen anschließenden zweiten Abschnitt mit den Schritten 345 und 350, in denen auf der Basis der bestimmten Hinderniskarte 130 eine Steuerung des Kraftfahrzeugs 105 erfolgt. Dabei ist das Verfahren des ersten Abschnitts auch ohne die Schritte des zweiten Abschnitts ausführbar.

In einem ersten Schritt 305 wird die Hinderniskarte 130 im Speicher 125 bereitgestellt. Dabei wird üblicherweise die Kennzeichnung aller Rasterpunkte 135 entfernt. In einem anschließenden Schritt 310 kann optional eine Route des Kraftfahrzeugs 105 bestimmt werden. Die Route kann beispielsweise im Navigationssystem 160 hinterlegt sein.

In einem Schritt 315 werden Wegpunkte 115 auf der Basis von Kartendaten des Navigationssystems 160 oder auf der Basis von Sensorsignalen der Sensoren 140, 145 bestimmt. Die bestimmten Wegpunkte 115 werden in einem nachfolgenden Schritt 320 interpoliert, um einen Verlauf der Straße 110 bereitzustellen.

In einem weiteren Schritt 325 werden Ausdehnungen, Formen und Ausrichtungen von Zellen bestimmt, in die die Umgebung des Kraftfahrzeugs 105 anschließend eingeteilt wird. Dabei werden die Ausdehnungen der Zellen 205 insbesondere in Abhängigkeit ihrer Lage bezüglich des Verlaufs der Straße 110 bestimmt, wie oben mit Bezug auf die Figuren 2B und 2C beispielhaft beschrieben ist.

In einem nachfolgenden Schritt 330 erfolgt ein Abtasten der Umgebung mittels der Sensoren 140, 145, falls dies nicht bereits im Rahmen des Schritts 315 erfolgt ist. Anschließend werden in einem Schritt 335 belegte Zellen 205 erfasst und korrespondierende Rasterpunkte 135 der Hinderniskarte 130 gekennzeichnet. Anschließend kann die bestimmte Hinderniskarte 130 in einem Schritt 340 bereitgestellt werden.

Auf der Basis der bereitgestellten Hinderniskarte 130 kann eine Steuerung des Kraftfahrzeugs 150 erfolgen, wie oben angedeutet wurde. Dazu kann in einem Schritt 345 eine Verhaltensabsicht für das Kraftfahrzeug 105 erfasst werden. Die Verhaltensabsicht kann beispielsweise umfassen, dass das Kraftfahrzeug 105 sich entlang der Straße 110 bewegen und eine Kollision mit Hindernissen aller Art vermeiden soll. In einem nachfolgenden Schritt 350 kann die Verhaltensabsicht auf der Basis der im Schritt 340 bereitgestellten Hinderniskarte 130 in eine Soll-Bewegung des Kraftfahrzeugs 105 umgesetzt werden und es können Steuersignale für eine Richtungs- oder Geschwindigkeitssteuerung des Kraftfahrzeugs 105 bestimmt werden. Die bestimmten Signale können über die Schnittstelle 150, 155 entsprechend ausgegeben werden.

Anschließend kann das Verfahren zum Schritt 310 zurückkehren und erneut durchlaufen, wobei einige der Schritte nur partiell bzw. inkrementell ausgeführt werden müssen, falls die Ergebnisse des vergangenen Durchlaufs großteils unverändert sind.

## Patentansprüche

1. Verfahren (300) zum Erstellen einer Hinderniskarte (130) einer Umgebung eines Kraftfahrzeugs (105) auf einer Straße (110), folgende Schritte umfassend:
- Bereitstellen (305) einer gerasterten Hinderniskarte (130);
- Abtasten (330) einer Umgebung des Kraftfahrzeugs (105), wobei die Umgebung in Zellen (205) unterteilt ist;
- Erfassen (335) von Zellen (205), die durch ein Hindernis belegt sind, und
- Kennzeichnen (335) von Rasterpunkten (135) der Hinderniskarte (130), die zu belegten Zellen (205) in der Umgebung korrespondieren,
- wobei Ausdehnungen der Zellen (205) in Abhängigkeit ihrer Lage bezüglich des Verlaufs der Straße (110) bestimmt werden,
**dadurch gekennzeichnet, dass**
- die Ausdehnungen der Zellen (205) an ein Höhenprofil (115) der Straße (110) angepasst sind.

2. Verfahren (300) nach Anspruch 1, wobei die geometrischen Formen der Zellen (205) in Abhängigkeit ihrer Lagen bezüglich des Verlaufs der Straße (110) bestimmt werden.

3. Verfahren (300) nach Anspruch 1 oder 2, wobei wenigstens einige Zellen (205) eine Hauptachse (220) aufweisen und die Hauptachsen (220) dieser Zellen (205) in Abhängigkeit des Verlaufs der Straße (110) ausgerichtet sind.

4. Verfahren (300) nach einem der vorangehenden Ansprüche, wobei der Verlauf der Straße (110) auf der Basis einer Folge von Wegpunkten (115) interpoliert (320) wird.

5. Verfahren (300) nach einem der vorangehenden Ansprüche, wobei die Ausdehnungen der Zellen (205) in Bewegungsrichtung des Kraftfahrzeugs (105) mit dem Abstand vom Kraftfahrzeug (105) ansteigen.

6. Verfahren (300) zum Steuern eines Kraftfahrzeugs (105), folgende Schritte umfassend:
- Erstellen (300) einer Hinderniskarte (130) nach einem der vorangehenden Ansprüche, und
- Bereitstellen (350) von Steuersignalen für das Kraftfahrzeug (105) auf der Basis der Hinderniskarte (130), um eine Kollision zwischen dem Kraftfahrzeug (105) und einem Hindernis zu vermeiden.

7. Computerprogrammprodukt mit Programmcodemitteln zur Durchführung des Verfahrens (300) nach einem der vorangehenden Ansprüche, wenn das Computerprogrammprodukt auf einer Verarbeitungseinrichtung (120) abläuft oder auf einem computerlesbaren Datenträger gespeichert ist.

8. Vorrichtung zur Erstellung einer Hinderniskarte (130) einer Umgebung eines Kraftfahrzeugs (105) auf einer Straße (110), folgende Elemente umfassend:
- einen Speicher (125) zur Aufnahme einer gerasterten Hinderniskarte (130);
- eine Abtasteinrichtung (140, 145) zur Abtastung einer Umgebung des Kraftfahrzeugs (105), wobei die Umgebung in Zellen (205) unterteilt ist;
- eine Verarbeitungseinrichtung (120) zur Erfassung von Zellen (205), die durch ein Hindernis belegt sind, und zur Kennzeichnung von Rasterpunkten (135) der Hinderniskarte (130), die zu belegten Zellen (205) in der Umgebung korrespondieren,
- wobei die Verarbeitungseinrichtung (120) ferner dazu eingerichtet ist, Ausdehnungen der Zellen (205) in Abhängigkeit ihrer Lage bezüglich des Verlaufs der Straße (110) zu bestimmen,
**dadurch gekennzeichnet, dass**
- die Ausdehnungen der Zellen (205) an ein Höhenprofil (115) der Straße (110) angepasst sind.

## Claims

1. Method (300) for creating an obstacle map (130) of an environment of a motor vehicle (105) on a road (110), comprising the following steps of:
- providing (305) an obstacle map (130) having a grid;
- scanning (330) an environment of the motor vehicle (105), the environment being subdivided into cells (205);
- detecting (335) cells (205) which are occupied by an obstacle, and
- marking (335) grid points (135) of the obstacle map (130) which correspond to occupied cells (205) in the environment,
- extents of the cells (205) being determined on the basis of their position with respect to the course of the road (110),
**characterized in that**
- the extents of the cells (205) are adapted to a height profile (115) of the road (110).

2. Method (300) according to Claim 1, the geometrical shapes of the cells (205) being determined on the basis of their positions with respect to the course of the road (110).

3. Method (300) according to Claim 1 or 2, at least some cells (205) having a main axis (220) and the main axes (220) of these cells (205) being oriented on the basis of the course of the road (110).

4. Method (300) according to one of the preceding claims, the course of the road (110) being interpolated (320) on the basis of a sequence of waypoints (115).

5. Method (300) according to one of the preceding claims, the extents of the cells (205) increasing in the direction of movement of the motor vehicle (105) with the distance from the motor vehicle (105).

6. Method (300) for controlling a motor vehicle (105), comprising the following steps of:
- creating (300) an obstacle map (130) according to one of the preceding claims, and
- providing (350) control signals for the motor vehicle (105) on the basis of the obstacle map (130) in order to avoid a collision between the motor vehicle (105) and an obstacle.

7. Computer program product having program code means for carrying out the method (300) according to one of the preceding claims when the computer program product runs on a processing device (120) or is stored on a computer-readable data storage medium.

8. Apparatus for creating an obstacle map (130) of an environment of a motor vehicle (105) on a road (110), comprising the following elements:
- a memory (125) for holding an obstacle map (130) having a grid;
- a scanning device (140, 145) for scanning an environment of the motor vehicle (105), the environment being subdivided into cells (205);
- a processing device (120) for detecting cells (205) which are occupied by an obstacle and for marking grid points (135) of the obstacle map (130) which correspond to occupied cells (205) in the environment,
- the processing device (120) also being set up to determine extents of the cells (205) on the basis of their position with respect to the course of the road (110),
**characterized in that**
- the extents of the cells (205) are adapted to a height profile (115) of the road (110).

## Revendications

1. Procédé (300) permettant de créer une carte d'obstacles (130) d'un environnement d'un véhicule automobile (105) sur une route (110), comprenant les étapes consistant à :
- fournir (305) une carte d'obstacles tramée (130) ;
- balayer (330) un environnement du véhicule automobile (105), l'environnement étant subdivisé en cellules (205) ;
- acquérir (335) des cellules (205) qui sont occupées par un obstacle, et
- signaler (335) des points de trame (135) de la carte d'obstacles (130) qui correspondent aux cellules occupées (205) dans l'environnement,
- dans lequel des extensions des cellules (205) sont déterminées en fonction de leur position par rapport au tracé de la route (110),
**caractérisé en ce que**
- les extensions des cellules (205) sont adaptées à un profil de hauteur (115) de la route (110).

2. Procédé (300) selon la revendication 1, dans lequel les formes géométriques des cellules (205) sont déterminées en fonction de leurs positions par rapport au tracé de la route (110).

3. Procédé (300) selon la revendication 1 ou 2, dans lequel au moins certaines cellules (205) présentent un axe principal (220) et les axes principaux (220) desdites cellules (205) sont orientés en fonction du tracé de la route (110).

4. Procédé (300) selon l'une quelconque des revendications précédentes, dans lequel le tracé de la route (110) est interpolé (320) sur la base d'une série de points d'itinéraire (115).

5. Procédé (300) selon l'une quelconque des revendications précédentes, dans lequel les extensions des cellules (205) croissent dans la direction de déplacement du véhicule automobile (105) avec la distance du véhicule automobile (105).

6. Procédé (300) permettant de commander un véhicule automobile (105), comprenant les étapes consistant à :
- créer (300) une carte d'obstacles (130) selon l'une quelconque des revendications précédentes, et
- fournir (350), des signaux de commande pour le véhicule automobile (105) sur la base de la carte d'obstacles (130) afin d'éviter une collision entre le véhicule automobile (105) et un obstacle.

7. Produit de programme informatique comportant des moyens à code de programme destinés à mettre en oeuvre le procédé (300) selon l'une quelconque des revendications précédentes, lorsque le produit de programme informatique est exécuté sur un dispositif de traitement (120) ou est stocké sur un support de données lisible par ordinateur.

8. Dispositif permettant de créer une carte d'obstacles (130) d'un environnement d'un véhicule automobile (105) sur une route (110), comprenant les éléments suivants :
- une mémoire (125) permettant de stocker une carte d'obstacles tramée (130) ;
un dispositif de balayage (140, 145) permettant de balayer un environnement du véhicule automobile (105), l'environnement étant subdivisé en cellules (205) ;
- un dispositif de traitement (120) permettant d'acquérir des cellules (205) qui sont occupées par un obstacle, et permettant de signaler des points de trame (135) de la carte d'obstacles (130) qui correspondent à des cellules occupées (205) dans l'environnement,
- dans lequel le dispositif de traitement (120) est en outre conçu pour déterminer des extensions des cellules (205) en fonction de leur position par rapport au tracé de la route (110),
**caractérisé en ce que**
- les extensions des cellules (205) sont adaptées à un profil de hauteur (115) de la route (110).
